Europäisches Patentamt

European Patent Office

Office européen des brevets

(11) Publication number: **0 202 595**
**B1**

(12) **EUROPEAN PATENT SPECIFICATION**

(45) Date of publication of patent specification: **03.05.89**

(51) Int. Cl.⁴: **F 16 C 29/00, F 16 C 29/06**

(21) Application number: **86106553.0**

(22) Date of filing: **14.05.86**

(54) Linear motion bearing and shafts.

(30) Priority: **14.05.85 US 733772**

(43) Date of publication of application:
**26.11.86 Bulletin 86/48**

(45) Publication of the grant of the patent:
**03.05.89 Bulletin 89/18**

(84) Designated Contracting States:
**AT BE CH DE FR IT LI NL SE**

(56) References cited:
**DE-A-1 949 182**
**FR-A-1 107 085**
**FR-A-1 571 318**
**GB-A-1 140 151**
**GB-A-2 009 337**
**GB-A-2 102 896**

(73) Proprietor: **THOMSON INDUSTRIES INC.**
**1029 Plandome Road**
**Manhasset New York 11030 (US)**

(72) Inventor: **Mutolo, Francis V.**
**12 East Crown Terrace**
**Morrisville Pennsylvania 19067 (US)**

(74) Representative: **Lederer, Franz, Dr. et al**
**Van der Werth, Lederer & Riederer**
**Patentanwälte Lucile-Grahn-Strasse 22**
**D-8000 München 80 (DE)**

Courier Press, Leamington Spa, England.

EP 0 202 595 B1

## Description

Background of the invention
1. Field of the invention
The present invention relates generally to anti-friction bearings for linear motion and more specifically to linear motion ball bearings disposed upon a pair of pre-aligned shafts which are coupled together.

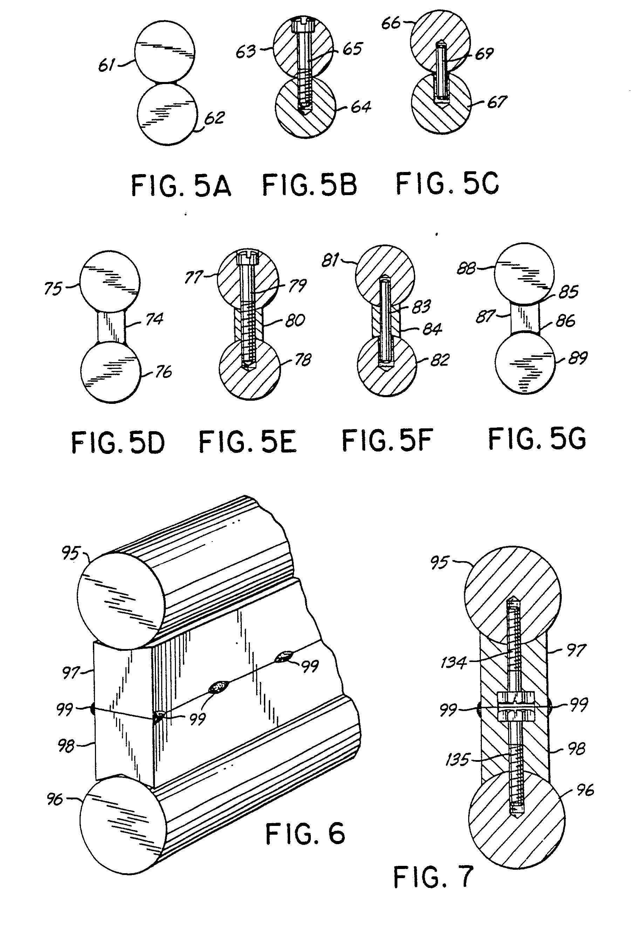

2. Description of the prior art
The invention starts out from a prior art as known from GB—A 2 102 896, Figure 6. In this prior art, two round shafts constitute a rail for movement for a housing. The shafts contact and/or support one another. Such non-rigid "twin shaft" lacks torsional support and resistance to bending.

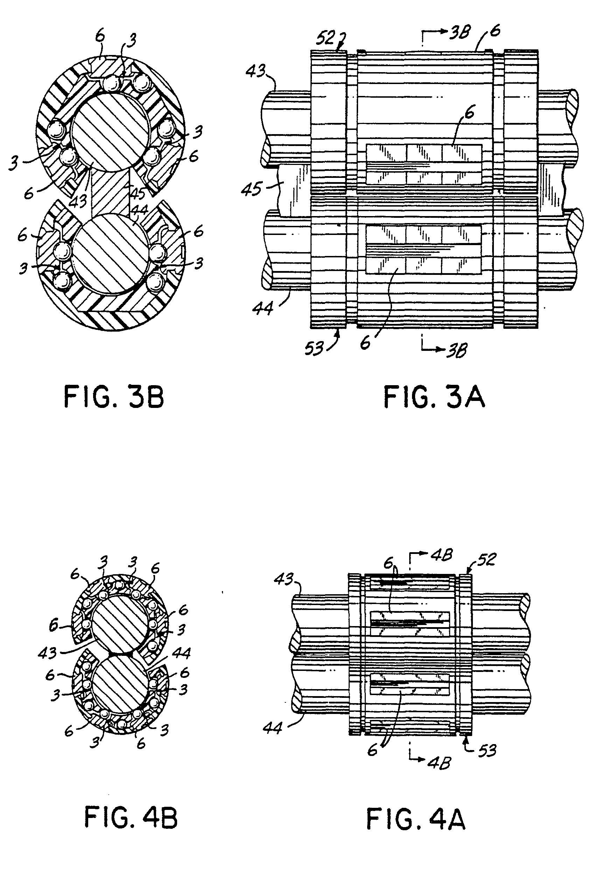

Further prior art which also does not provide for the desired rigidity comprises FR—A 1 107 085 which simply shows double-raceways mounted along a common support; GB—A 1 104 151 which relates to a method of manufacturing a guide arrangement, wherein a carriage slides on two slide plates; FR—A 1 571 318 which, in Figure 4, shows a two-shaft-motion assembly, the shafts being spaced from each other; and GB—A 2 009 337 which shows two spaced shafts carrying a slide base.

Further representative examples of linear motion ball bearings are described in U.S. patents 2,628,135, 3,545,826 and 4,334,716 which are assigned to the assignee of the present invention. Illustratively, patent 4,334,716 is directed towards a linear motion ball bearing of the "open type" in which the ball bearing cooperates with a shaft supported along its length. The ball retainer of the "open type" linear motion ball bearing has a longitudinal section removed from its outer surface in order to accommodate the shaft support member.

Whenever a rotational force or torque is applied to such bearings, the bearings do not resist rotation about their shaft. However, in some applications even a small amount of rotation is undesirable. Resorting to the use of two parallel shafts as supports for the bearings may not be an acceptable solution because of the substantial difficulty in locating the shafts parallel to any accurately spaced from each other so as to enable the shafts and bearings to function properly together. More particularly, when linear motion ball bearings are used to support a moving work or support table, two parallel shafts are generally required to give the table stability, but even such arrangement does not provide for full torsional and bending rigidity. Further, one of the installation problems includes mounting the shafts exactly parallel within close limits as well as having their centerlines accurately spaced apart. Many times, the user has difficulty in achieving the accuracy required. Accordingly, there is a need for shafts that are fixedly coupled together and which can support linear motion bearings. An object of this invention is to provide a linear motion bearing and shaft assembly using two pre-aligned and securely coupled shafts thereby eliminating an installation problem and forming a rigid beam structure which is capable of resisting deflection when the shafts are supported at their ends.

Summary of the invention
The invention provides an improved linear motion bearing and shaft assembly for axial movement which includes: a first round shaft; a second round shaft axially aligned with said first shaft, said first and second shafts being end supported to allow unrestricted axial movement along their lengths; a first linear motion bearing disposed on said first shaft for axial movement thereon; and a second linear motion bearing disposed on said second shaft for axial movement thereon; and which is characterized in that said first and second shafts are rigidly secured together along their length. The aligned round shafts are rigidly connected together by welding, adhesives, fastening means and the like. Claims 2 to 11 specify rigid connections. The aligned shafts may have a spacer fastened between them. The bearings in such an assembly may be of the anti-friction or plain bearing type and either roll or slide on the aligned shafts. In an illustrative application, an anti-friction first linear motion bearing is disposed upon one of the shafts. Such linear motion bearings preferably have sets of raceways that are formed in ball retainers which have longitudinal sections removed therefrom, as stated in claims 12 to 14, for providing a gap for the other shaft or for the spacer between the shafts. The raceways are substantially filled with balls and may include a load bearing plate. According to a specific embodiment, the pre-aligned shafts are coupled together with a special shaped spacer wherein the structure can be mounted on a flat surface thereby supporting the shafts along their full length instead of at the ends only, in order to have even more rigid support and better ability to resist deflection.

Brief description of the drawings
Figure 1 is a perspective view of a representative application of the apparatus of the present invention;
Figure 2A is an elevational view of the bearing assembly of Figure 1 disposed on a pair of aligned shafts fastened to a spacer and illustratively utilizing an anti-friction linear motion bearing;
Figure 2B is a cross-sectional view of the bearing assembly of Figure 2A taken along lines 2B—2B;
Figure 3A is an elevational view of an alternate embodiment of the bearing assembly of the present invention;
Figure 3B is a cross sectional view of the bearing assembly of Figure 3A taken along line 3B—3B;
Figure 4A is an elevational view of a further alternate embodiment of the bearing assembly of the present invention;

Figure 4B is a cross sectional view of the bearing assembly of Figure 4A taken along line 4B—4B;

Figures 5A—5G are illustrations of various other methods for joining the shafts;

Figure 6 is a partial perspective view of a pair of shaft supports spot welded together to form a common spacer;

Figure 7 is a cross sectional view of the shafts of Figure 6;

Figure 8A is an illustration of a pair of support shafts joined by a common spacer and staggered bolts; and

Figure 8B is a cross sectional view of the shafts of Figure 8A taken along line 8B—8B;

Figure 9 is an end view of an alternate embodiment of the bearing assembly having a channel shaped spacer for fixedly coupling the shafts;

Figure 10 is an end view of an alternate embodiment of the bearing assembly having a T shaped support member for fixedly coupling the shafts; and

Figure 10A is an end view of an alternate embodiment of the bearing assembly having a unitary support member with a relatively wide stance for fixedly coupling the shafts.

Detailed description of the invention

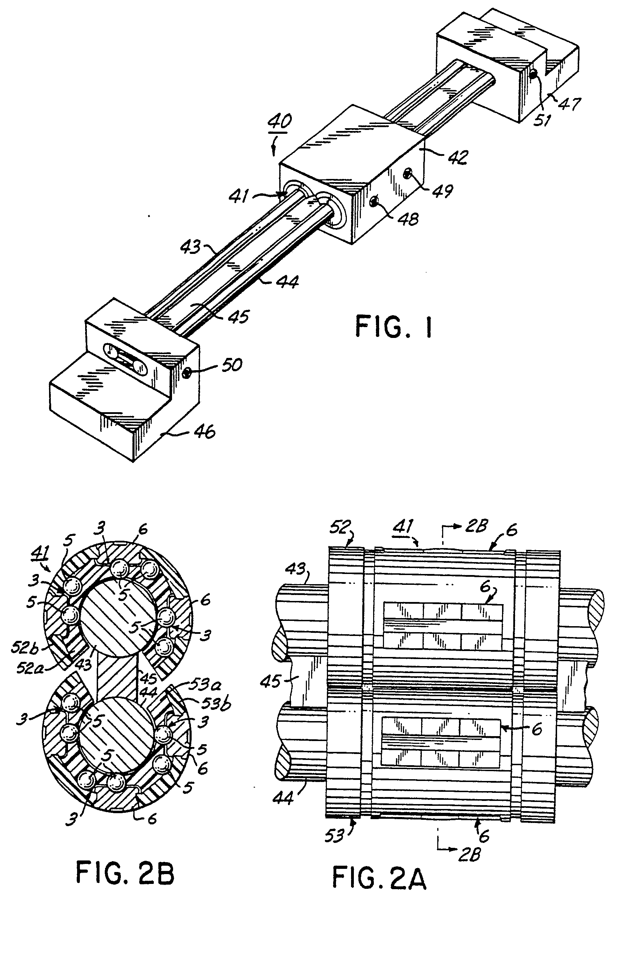

Referring now to Figure 1, the device 40 includes a bearing assembly 41 disposed within a pillow block 42 having a bore formed therein for the bearing assembly 41 and a pair of aligned shafts 43, 44. The bearing assembly 41 is preferably retained within the bore of the pillow block 42 by screws 48, 49 threaded into the pillow block. The shafts 43, 44 may be joined together as by spacer 45 as hereinafter described in greater detail. The ends of the shafts 43, 44 are mounted in support members 46, 47, and preferably retained by screws 50, 51 respectively.

The device 40 illustrated in Figure 1 is merely a representative application of the present invention. Numerous other and different applications for the bearing and shafts of the present invention can be found in the machine tool industry. The device 40 is particularly well suited for applications in which linear motion of the pillow block 42 or some other member is desired and where the rotation of the pillow block 42 relative to the shafts is not desired.

It should also be understood that although the present invention is described in terms of an antifriction type linear motion ball bearing, any type of bearing capable of linear motion is adaptable for use in the present invention. Such other linear motion bearings could include simple ball bearings, sleeve type bearings of metal or plastic, or composition sleeve type bearing.

As will be appreciated by the workers in this art, the invention may be practiced using hardened pre-aligned shafts or shafts of softer metal depending on the bearing utilized. For example, anti-friction linear motion ball bearings should preferably be used with hardened shafting while the use of plain bearings will permit softer metal shafting to be utilized.

Referring now to Figures 2A, 2B, it can be appreciated that in one illustrative embodiment of the present invention the bearing assembly 41 includes an anti-friction linear motion ball bearing having ball retainers 52, 53 which surround shafts 43, 44 and have a plurality of generally oval-shaped raceways disposed beneath a load carrying plate 6. The shafts have a spacer 45 disposed between them.

As best seen in Figure 2B, the ball retainers 52, 53 are preferably formed as two member units 52a, 52b and 53a, 53b from resilient non-metallic material. Examples of materials which have been found to operate entirely satisfactorily include Delrin or Nylon and it will be apparent that other moldable materials will operate satisfactorily. Advantageously, the material is selected so that the retainers 52, 53 may be produced by low cost, high speed, mass manufacturing methods, such as injection molding.

The first members 52a, 53a are generally cylindrical members having a longitudinal section removed therefrom and having the raceways 3 formed therein. The first members 52a, 53a, are fitted around the shafts 43, 44 with the spacer 45 disposed in the removed longitudinal section. The second members 52b, 53b are also generally cylindrical members which are fitted over the first members 52a, 53a.

Advantageously in this illustrative embodiment, the bottom of the straight, load-bearing portion of each raceway 3 is slotted so that the balls 5 may contact the shaft 43, the slot being somewhat narrower than the diameter of the balls. The slot terminates at each end of the straight portion whereupon the bottom is closed and is slightly inclined along the curved end portions of the raceway until it reaches the level of the bottom of the straight, load-free portion of the raceway. It will thus be seen that the balls 5 are in direct contact with both the shaft 43 and the load carrying plate 6 when in the straight load bearing portion of the raceway but have no contact with either the shaft 43 or the load carrying plate while in the curved or straight load free portions of the raceway.

In Figure 2B, it can be appreciated that there are illustratively three raceways 3 and three load bearing plates 6 evenly distributed about each support shaft 43, 44. In this embodiment of the invention the spacer 45 joins the two shafts 43, 44 and the spacer 45 is disposed symmetrically between the removed longitudinal sections of retainers 52, 53. In this embodiment of the invention, both the shafts 43, 44 are working shafts with an equal number of raceways 3 disposed about each shaft.

The structural details of anti-friction linear motion ball bearings usable with this invention are well known to the workers skilled in the art and will not be discussed here. Illustrative structures are shown in the patents hereinabove mentioned, and their respective disclosures are incorporated by reference herein. The details of other bearings capable of either rolling or sliding on a shaft such as plain bearings are also well known to workers in the art and need not be described herein.

An alternate embodiment of the present invention is illustrated in Figures 3A and 3B. In this illustrative embodiment of the invention, the ball retainer 52 includes three raceways 3 and three load-bearing plates 6 evenly disposed about the shaft 43, and the ball retainer 53 includes two raceways and two load-bearing plates 6 disposed about the shaft 44. The shaft 43 carries the majority of the load and the shaft 44 acts as an outrigger.

Referring now to Figures 4A and 4B, a further alternate embodiment of the present invention is illustrated. In this embodiment of the invention the shafts 43, 44 are coupled directly together without an intermediate spacer along a joint formed on the outer surfaces of the shafts. The ball retainers 52, 53 of this embodiment include four raceways 3 and four load bearing plates 6 which are disposed about the shafts 43, 44 respectively. The ball retainers 52, 53 are disposed in close proximity to one another. One end of each ball retainer 52, 53 extends into the removed longitudinal section of the opposing ball retainer. The shafts 43, 44 are working shafts and there are an equal number of raceways disposed about each shaft.

Referring now to Figures 5A to 5G, various other methods are illustrated for fastening two shafts together. In certain of these methods, the shafts are fastened together in a plurality of locations along a joint formed along the outer surfaces of the shafts. The shafts can also be coupled together with a continuous welding, brazing or cementing process. In Figure 5A the shafts 61, 62 are illustrated as being welded, brazed or cemented together. In Figure 5B the shafts 63, 64 are illustrated in cross section with a bolt 65 passing through the shaft 63 and being threaded into the shaft 64. The head of bolt 65 is countersunk into the shaft 63. In Figure 5C the shafts 66, 67 are illustrated in cross section with a pin 69 cemented or pressed into a pair of holes formed in the shafts. In Figure 5D the shaft 75 is illustrated as being welded or brazed to a spacer 74 which in turn is welded or brazed to a second shaft 76. In Figure 5E the shafts 77, 78 are illustrated in cross section as being fastened together by a bolt 79 and a spacer 80. The bolt 79 passes through holes in the shaft 77 and spacer 80 and is threaded into the shaft 78. The head of bolt 79 is countersunk into the shaft 77. In Figure 5F the shafts 81, 82 are illustrated in cross section as being fastened together by a pin 83 and a spacer 84. The pin 83 passes through a hole in the spacer 84 and is cemented or pressed into holes formed in the shafts 81, 82. In Figure 5G the shafts 88, 89 are illustrated as being cemented at joints 85, 86 to a spacer 87.

Referring to Figure 6, a perspective view of a pair of shafts 95, 96 is provided. The shafts 95, 96 are standard items having support members 97, 98 affixed respectively thereto. The support members 97, 98 can be spot welded together by welds 99 or alternatively can be continuously welded to form the spacer between shafts 95, 96.

Referring now to Figure 7, a cross sectional view illustrates the pair of shafts 95, 96 which are joined to support members 97, 98 by machine screws 134, 135. The machine screws 134, 135 pass through the support members 97, 98 and are threaded into the shafts 95, 96. The support members 97, 98 are then welded together to form a pair of aligned shafts with a spacer therebetween.

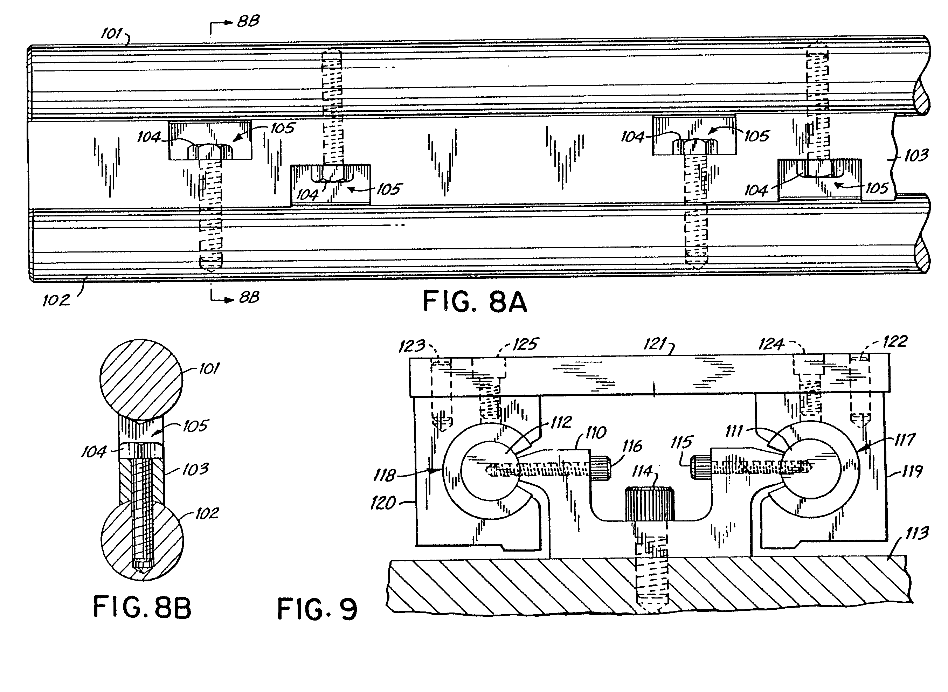

Referring now to Figures 8A and 8B, a partial elevational view and a cross sectional view of a pair of shafts 101, 102 are provided. The shafts 101, 102 are fastened together via a spacer 103 and a plurality of staggered bolts 104. The spacer 103 includes a plurality of rectangular apertures 105. The bolts 104 pass through holes formed in the spacer 103 at the rectangular apertures 105 and are then threaded into holes in the respective shafts 101, 102. The rectangular apertures 105 provide access to the bolts 104 and allow them to be securely seated, thereby providing a rigid support shaft assembly 101, 102, 103 without the necessity of welding as in Figures 6 or 7.

Referring now to Figure 9, an alternate embodiment of the bearing assembly includes a channel shaped spacer 110 for fixedly coupling shafts 111, 112 together, and which can be fastened to a flat base to rigidly support the shafts along their entire length thereby minimizing deflection. Preferably, the channel shaped spacer 110 is fastened to a base 113 by a bolt 114 and the shafts 111, 112 are fastened to the channel shaped spacer 110 by bolts 115, 116, respectively, or by any of the other means of attachment such as welding, brazing or cementing. Ball retainers 117, 118 of the open type which are described above are disposed about the shafts 111, 112 and retained in blocks 119, 120. A horizontal platform or table 121 is secured to the blocks 119, 120. Preferably, the table 121 is secured by dowels 122, 123 and bolts 124, 125 which are threaded into the blocks 119, 120. The table 121 may be linearly displaced in a direction parallel to the aligned shafts 111, 112 which are fixedly coupled together.

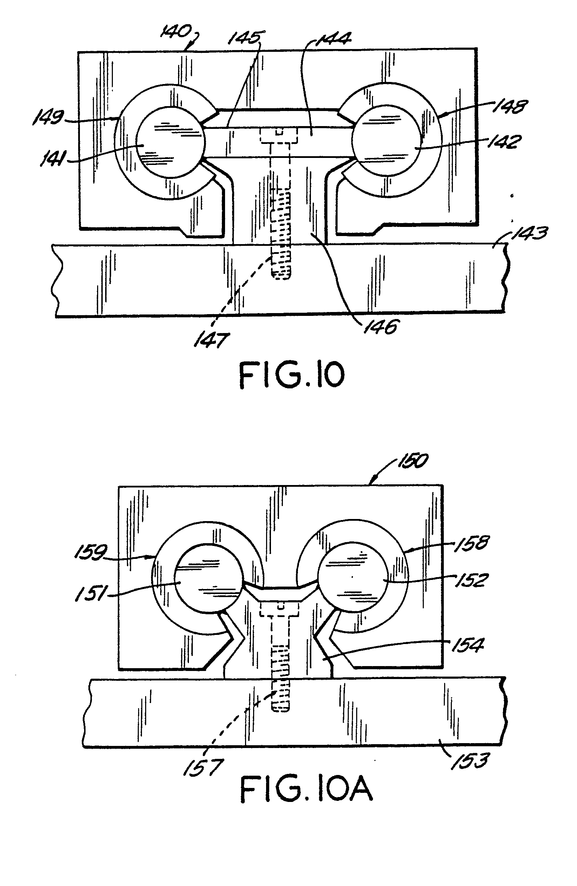

Referring now to Figure 10, another alternate embodiment of the present invention enables a pair of shafts 141, 142 to be attached to a base 143 along their entire length. This alternate embodiment includes a web or support member 144 which is generally T shaped or otherwise suitably shaped. The web or support member 144 is more compact than the channel 110 of Figure 9 and is less susceptible to deflections caused by the loads on shafts 141, 142.

The support member 144 may be a unitary member or may be made from a horizontal member 145 and a vertical member 146 as illustrated in Figure 10. The support member 144 runs parallel to the shafts 141, 142 and provides support along their entire length. This arrangement is particularly advantageous when there are heavy loads which might otherwise cause some deflection in the shafts 141, 142. The horizontal member 145 may be attached to the shafts 141, 142 by welds or by any of the methods described above, such as by cement or screws. The horizontal member 145 is preferably attached to the vertical member 146 and the base 143 by a plurality of bolts 147. The bottom of bolt 147 is threaded into base 143 and the top is countersunk into the horizontal member 145. The shafts 141, 142 are disposed within the bearings 149, 159 of the housing 140.

Referring now to Figure 10A, another alternate embodiment of the invention includes a unitary support member 154 that is preferably welded to shafts 151, 152. The unitary support member 154 has a relatively wide stance and runs parallel to the shafts 151, 152 to provide support along their entire length. The unitary support member is preferably affixed to a base 153 by a plurality of bolts 157. The bolts 157 extend through the unitary support member 154 and are threaded into the base 153. The unitary support member 154 is relatively compact and is capable of supporting the shafts 151, 152 in close proximity. The shafts 151, 152 are disposed within the bearings 158, 159 and the housing 150.

**Claims**

1. A linear motion bearing and shaft assembly for axial movement which comprises:
   a first round shaft (43);
   a second round shaft (44) axially aligned with said first shaft, said first and second shafts being end supported to allow unrestricted axial movement along their lengths;
   a first linear motion bearing (52) disposed on said first shaft (43) for axial movement thereon; and
   a second linear motion bearing (53) disposed on said second shaft (44) for axial movement thereon, characterized in that said first and second shafts (43, 44) are rigidly secured together along their length.

2. An apparatus according to claim 1 wherein said first and second round shafts (43, 44; 75, 76; 77, 78; 81, 82; 88, 89; 101, 102) are rigidly secured together by a spacer (45, 74, 80, 84, 87, 103) which is disposed between said first and second shafts.

3. An apparatus according to claim 2 wherein said spacer (74) is spot welded or brazed to said first and second shafts (75, 76).

4. An apparatus according to claim 2 wherein said spacer (74) is continuously welded or brazed to said first and second shafts (75, 76).

5. An apparatus according to claim 2 wherein said spacer (80) is bolted to said first and second shafts (77, 78) by a plurality of bolts (79), said bolts pass through said spacer and are threaded into at least one shaft (78) and have their heads countersunk in a shaft (77).

6. An apparatus according to claim 2 wherein said spacer (84) is fastened to said first and second shafts (81, 82) by a plurality of pins (83) which pass through said spacer and are cemented or pressed into holes formed in said first and second shafts.

7. An apparatus according to claim 2 wherein said spacer (87) is cemented (at 85, 86) to said first and second shaft (88, 89).

8. An apparatus according to claim 2 wherein said spacer (103) includes a plurality of apertures (105) and bolts (104) pass through said spacer at the apertures to secure said first and second shafts (101, 102) to said spacer.

9. An apparatus according to claim 1 wherein said first and second shafts (61, 62) are secured together by welding, cementing or brazing of a joint along the outer surfaces of said first and second shafts.

10. An apparatus according to claim 1 wherein said first and second shafts (63, 64) are secured together by a plurality of bolts (65), said bolts being threaded into at least one shaft (64) and having their heads countersunk into a shaft (63).

11. An apparatus according to claim 1 wherein said first and second shafts (66, 67) are secured together by a plurality of pins (69) cemented or pressed into holes formed in said first and second shafts.

12. An apparatus according to any of claims 2 to 11, wherein said first and second linear motion bearings (52, 53) are anti-friction bearings with include first and second sets of raceways (3), equal or unequal in number and substantially filled with balls (5), said bearings having longitudinal sectors thereof removed.

13. An apparatus corresponding to claim 12 wherein the end of each of said sets of raceways (3) extends into the removed longitudinal section of the other set of raceways.

14. An apparatus according to claims 12 or 13 wherein said sets of raceways (3) correspond to each other.

15. An apparatus according to claim 1 or 2 wherein said first and second linear motion bearings (52, 53) are disposed in the bore of a pillow block (42).

16. An apparatus according to claim 2 wherein the spacer securing together said first and second shafts (111, 112) is a channel shaped spacer (110).

17. An apparatus according to claim 16 wherein said first and second linear motion bearings (52, 53) are disposed in first and second blocks (119, 120) which are coupled together by a platform (121).

18. An apparatus according to claim 2 wherein said first and second linear motion bearings (117, 118; 148, 149; 158, 159) are disposed in blocks (119, 120) which are connected to a moveable table (121, 140, 150).

19. An apparatus according to claim 1 wherein said first and second shafts (141, 142; 151, 152) are secured together by a support member (144, 154) disposed between the shafts for supporting the shafts along their entire length when attached to a rigid structure (143, 153).

20. An apparatus according to claim 19 wherein said support member (144) includes a first portion (145) coupled to said shafts (141, 142) and a second portion (146) which supports the first portion.

21. An apparatus according to claim 19 wherein the support member (154) is a unitary member.

22. An apparatus according to claim 19 or 20 wherein the support member (144) is a two piece member.

**Patentansprüche**

1. Linearlager und Achsenanordnung für eine Axialbewegung, umfassend:

eine erste runde Achse (43);

eine zweite runde Achse (44), die mit der ersten Achse axial ausgerichtet ist, wobei die erste und die zweite Achse endseitig abgestützt sind, um über ihre Länge eine unbehinderte Axialbewegung zu ermöglichen;

ein erstes Linearlager (52), das auf der ersten Achse (43) zur Axialbewegung auf dieser angeordnet ist; und

ein zweites Linearlager (53), das auf der zweiten Achse (44) zur Axialbewegung auf dieser angeordnet ist, dadurch gekennzeichnet, daß die erste und die zweite Achse (43, 44) über ihre gesamte Länge starr miteinander verbunden sind.

2. Vorrichtung nach Anspruch 1, bei welcher die erste und die zweite runde Achse (43, 44; 75, 76; 77, 78; 81, 82; 88, 89; 101, 102) durch einen Abstandhalter (45, 74, 80, 84, 87, 103) starr miteinander verbunden sind, der zwischen der ersten und der zweiten Achse angeordnet ist.

3. Vorrichtung nach Anspruch 2, bei welcher der Abstandhalter (74) mit der ersten und der zweiten Achse (75, 76) durch Punktschweißen oder Punktlöten verbunden ist.

4. Vorrichtung nach Anspruch 2, bei welcher der Abstandhalter (74) mit der ersten und der zweiten Achse (75, 76) durchgehend verschweißt oder verlötet ist.

5. Vorrichtung nach Anspruch 2, bei welcher der Abstandhalter (80) mit der ersten und der zweiten Achse (77, 78) durch eine Vielzahl von Bolzen (79) verbunden ist, wobei die Bolzen sich durch den Abstandhalter erstrecken und in zumindest eine Achse (78) eingeschraubt sind und mit ihren Köpfen in einer Achse (77) versenkt sind.

6. Vorrichtung nach Anspruch 2, bei welcher der Abstandhalter (84) an der ersten und an der zweiten Achse (81, 82) durch eine Vielzahl von Zapfen (83) befestigt ist, die sich durch den Abstandhalter erstrecken und in Löcher eingeklebt oder eingepreßt sind, die in der ersten und in der zweiten Achse ausgebildet sind.

7. Vorrichtung nach Anspruch 2, bei welcher der Abstandhalter (87) mit der ersten und der zweiten Achse (88, 89) verklebt ist (bei 85, 86).

8. Vorrichtung nach Anspruch 2, bei welcher der Abstandhalter (103) eine Vielzahl von Ausnehmungen (105) und Bolzen (104) aufweist, die sich an den Ausnehmungen durch den Abstandhalter ertrecken, um die erste und die zweite Achse (101, 102) mit dem Abstandhalter zu verbinden.

9. Vorrichtung nach Anspruch 1, bei welcher die erste und die zweite Achse (61, 62) durch Schweißen, Kleben oder Löten einer Verbindung entlang der äußeren Oberflächen der ersten und zweiten Achsen miteinander verbunden sind.

10. Vorrichtung nach Anspruch 1, bei welcher die erste und die zweite Achse (63, 64) miteinander durch eine Vielzahl von Bolzen (65) verbunden sind, wobei die Bolzen in zumindest eine Achse (64) eingeschraubt sind und ihre Köpfe in einer Achse (63) versenkt sind.

11. Vorrichtung nach Anspruch 1, bei welcher die erste und die zweite Achse (66, 67) durch eine Vielzahl von Zapfen (69) miteinander verbunden sind, die in Löcher eingeklebt oder eingepreßt sind, welche in der ersten und in der zweiten Achse ausgebildet sind.

12. Vorrichtung nach einem der Ansprüche 2 bis 11, bei welcher das erste und das zweite Linearlager (52, 53) Antifriktionslager sind, die erste und zweite Sätze von Laufrillen (3) aufweisen, deren Anzahl gleich oder ungleich ist und die im wesentlichen mit Kugeln (5) gefüllt sind, wobei Längssektoren der Lager von diesen entfernt sind.

13. Vorrichtung nach Anspruch 12, bei welcher das Ende jedes Satzes von Laufrillen (3) sich in den entfernten Längssektor des anderen Satzes von Laufrillen erstreckt.

14. Vorrichtung nach Anspruch 12 oder 13, bei welcher die Sätze von Laufrillen (3) einander entsprechen.

15. Vorrichtung nach Anspruch 1 oder 2, bei welcher das erste und das zweite Linearlager (52, 53) in der Bohrung einer Lagerstütze (42) angeordnet sind.

16. Vorrichtung nach Anspruch 2, bei welcher die die erste und die zweite Achse (111, 112) verbindende Abstandhalter ein kanalförmiger Abstandhalter (110) ist.

17. Vorrichtung nach Anspruch 16, bei welcher das erste und das zweite Linearlager (52, 53) in ersten und zweiten Blöcken (119, 120) angeordnet sind, die durch eine Plattform (121) miteinander gekuppelt sind.

18. Vorrichtung nach Anspruch 2, bei welcher das erste und das zweite Linearlager (117, 118; 148, 149; 158, 159) in Blöcken (119, 120) angeordnet sind, die durch einen bewegbaren Tisch (121, 140, 150) miteinander verbunden sind.

19. Vorrichtung nach Anspruch 1, bei welcher die erste und die zweite Achse (141, 142; 151, 152) durch ein Tragelement (144, 154) miteinander verbunden sind, das zum Abstützen der Achsen über ihre gesamte Länge zwischen den Achsen angeordnet ist, wobei es an einem starren Aufbau (143, 153) befestigt ist.

20. Vorrichtung nach Anspruch 19, bei welcher das Tragelement (144) einen ersten Teil (145) aufweist, der mit den Achsen (141, 142) gekuppelt ist, und einen zweiten Teil (146), welcher den ersten Teil abstützt.

21. Vorrichtung nach Anspruch 19, bei welcher das Tragelement (154) ein einteiliges Element ist.

22. Vorrichtung nach Anspruch 19 oder 20, bei welcher das Tragelement (144) ein zweiteiliges Element ist.

**Revendications**

1. Ensemble de paliers linéaires et d'arbres pour mouvement axial, comprenant:

un premier arbre rond (43),

un second arbre rond (44) aligné axialement avec le premier arbre, ces premier et second arbres étant supportés à leurs extrémités de façon à permettre un mouvement axial sans obstacle sur toute leur longueur,

un premier palier linéaire (52) disposé sur le premier arbre (43) de manière à pouvoir se déplacer axialement sur celui-ci, et

un second palier linéaire (53) disposé sur le second arbre (44) de manière à pouvoir se déplacer axialement sur celui-ci, caractérisé en ce que les premier et second arbres (43, 44) sont rigidement fixées l'un à l'autre sur toute leur longueur.

2. Dispositif selon la revendication 1, dans lequel les premier et second arbres ronds (43, 44; 75, 76; 77, 78; 81, 82; 88, 89; 101, 102) sont fixés rigidement l'un à l'autre par une pièce intercalaire (45, 74, 80, 84, 87, 103) qui est disposée entre lesdits premier et second arbres.

3. Dispositif selon la revendication 2, dans lequel la pièce intercalaire (74) est soudée ou brasée par points sur lesdits premier et second arbres (75, 76).

4. Dispositif selon la revendication 2, dans lequel la pièce intercalaire (74) est fixée par une soudure ou une brasure continue sur lesdits premier et second arbres (75, 76).

5. Dispositif selon la revendication 2, dans lequel la pièce intercalaire (80) est boulonnée sur lesdits premier et second arbres (77, 78) par plusieurs boulons (79), ces boulons traversant la pièce intercalaire et étant vissés dans l'un des arbres (78) au moins, leurs têtes étant noyées dans un arbre (77).

6. Dispositif selon la revendication 2, dans lequel la pièce intercalaire (84) est fixée auxdits premier et second arbres (81, 82) par plusieurs chevilles (83) qui passent à travers la pièce intercalaire et sont collées ou refoulées dans des trous formés dans lesdits premier et second arbres.

7. Dispositif selon la revendication 2, dans lequel la pièce intercalaire (87) est collée (en 85, 86) sur lesdits premier et second arbres (88, 89).

8. Dispositif selon la revendication 2, dans lequel la pièce intercalaire (103) comporte plusieurs ouvertures (105) et des boulons (104) passent à travers la pièce intercalaire au niveau des ouvertures pour fixer lesdits premier et second arbres (101, 102) à la pièce intercalaire.

9. Dispositif selon la revendication 1, dans lequel lesdits premier et second arbres (61, 62) sont fixés l'un à l'autre par un joint soudé, brasé ou collé le long des surfaces extérieures desdits premier et second arbres.

10. Dispositif selon la revendication 1, dans lequel lesdits premier et second arbres (63, 64) sont fixés l'un à l'autre par plusieurs boulons (65), ces boulons étant vissés dans l'un des arbres (64) au moins et ayant leurs têtes noyées dans un arbre (63).

11. Dispositif selon la revendication 1, dans lequel lesdits premier et second arbres (66, 67) sont fixés l'un à l'autre par plusieurs chevilles (69) collées ou refoulées dans des trous formés dans les premier et second arbres.

12. Dispositif selon l'une quelconque des revendications 2 à 11, dans lequel lesdits premier et second paliers linéaires (52, 53) sont des paliers à roulement qui contiennent une première et une seconde série de pistes de roulement (3), en nombre égal ou inégal et remplies pratiquement de billes (5), ces paliers présentant des secteurs longitudinaux qui sont supprimés.

13. Dispositif selon la revendication 12, dans lequel l'extrémité de chacune desdites séries de pistes de roulement (3) s'étend dans la section longitudinale supprimée de l'autre série de pistes de roulement.

14. Dispositif selon la revendication 12 ou 13, dans lequel lesdites séries de pistes de roulement (3) se correspondent mutuellement.

15. Dispositif selon la revendication 1 ou 2, dans lequel lesdits premier et second paliers linéaires (52, 53) sont disposés dans la forure d'un palier-support (42).

16. Dispositif selon la revendication 2, dans lequel la pièce intercalaire qui fixe lesdits premier et second arbres (111, 112) l'un à l'autre est une pièce intercalaire profilée en U (110).

17. Dispositif selon la revendication 16, dans lequel lesdits premier et second paliers linéaires (52, 53) sont disposés dans des premier et second blocs (119, 120) qui sont accouplés par une plate-forme (121).

18. Dispositif selon la revendication 2, dans lequel lesdits premier et second paliers linéaires (117, 118; 148, 149; 158, 159) sont disposés dans des blocs (119, 120) qui sont raccordés à une table mobile (121, 140, 150).

19. Dispositif selon la revendication 1, dans lequel lesdits premier et second arbres (141, 142; 151, 152) sont fixés l'un à l'autre par une pièce de support (144, 154) disposée entre les arbres de manière à supporter ceux-ci sur toute leur longueur lorsqu'elle est fixée à une structure rigide (143, 153).

20. Dispositif selon la revendication 19, dans lequel la pièce de support (144) comprend une première partie (145) rattachée auxdits arbres (141, 142) et une seconde partie (146) qui supporte la première partie.

21. Dispositif selon la revendication 19, dans lequel la pièce de support (154) est une pièce d'un seul tenant.

22. Dispositif selon la revendication 19 ou 20, dans lequel la pièce de support (144) est une pièce en deux parties.

FIG. 1

FIG. 2B

FIG. 2A

FIG. 3B

FIG. 3A

FIG. 4B

FIG. 4A

FIG. 5A    FIG.5B    FIG. 5C

FIG.5D    FIG. 5E    FIG. 5F    FIG. 5G

FIG. 6

FIG. 7

FIG. 8A

FIG. 8B

FIG. 9

EP 0 202 595 B1

FIG.10

FIG.10A